(19) **Europäisches Patentamt**
**European Patent Office**
**Office européen des brevets**

(11) **EP 1 784 624 B1**

(12) **EUROPEAN PATENT SPECIFICATION**

(45) Date of publication and mention
of the grant of the patent:
**16.12.2009 Bulletin 2009/51**

(51) Int Cl.:
*G01J 3/36* (2006.01) *G01J 3/04* (2006.01)

(21) Application number: **05775724.7**

(22) Date of filing: **23.08.2005**

(86) International application number:
**PCT/IB2005/052760**

(87) International publication number:
**WO 2006/021926 (02.03.2006 Gazette 2006/09)**

(54) **CALIBRATION FOR SPECTROSCOPIC ANALYSIS**

KALIBRIERUNG FÜR SPEKTROSKOPISCHE ANALYSEN

ETALONNAGE DESTINE A L'ANALYSE SPECTROSCOPIQUE

(84) Designated Contracting States:
**AT BE BG CH CY CZ DE DK EE ES FI FR GB GR HU IE IS IT LI LT LU LV MC NL PL PT RO SE SI SK TR**

(30) Priority: **26.08.2004 EP 04104086**

(43) Date of publication of application:
**16.05.2007 Bulletin 2007/20**

(73) Proprietor: **Koninklijke Philips Electronics N.V. 5621 BA Eindhoven (NL)**

(72) Inventor: **RENSEN, Wouter, Société Civile SPID F-75008 PARIS (FR)**

(74) Representative: **Schouten, Marcus Maria Philips Intellectual Property & Standards P.O. Box 220 5600 AE Eindhoven (NL)**

(56) References cited:
**JP-A- 61 266 925    SU-A- 1 120 242**
**US-A- 3 846 024    US-A- 4 652 761**
**US-A- 5 489 980    US-A- 5 539 519**
**US-A- 5 737 076**

**Description**

The present invention relates to the field of optical spectroscopy.

Spectroscopic techniques are widely used for determination of the composition of a substance. By spectrally analyzing an optical signal, i.e. a spectroscopic optical signal, the concentration of a particular compound of the substance can be precisely determined. The concentration of a particular substance is typically given by an amplitude of a principal component of an optical signal.

US 4,652,761 discloses a holographic grating spectrophotometer for detecting ozone and sulphur dioxide in the atmosphere which provides automatic calibration and which provides automatic linearity correction for a photomultiplier tube used in the spectral photometer. Automatic calibration is provided by using a computer to control a steppermotor to move the grating so that the photomultiplier tube receives maximum intensity at the calibration wavelength of 302.1 nm from a mercury source. Automatic linearity correction is obtained by cycling a wavelength selection mask across exit slits located in the focal plane of the device and firstly combines separately taken counts of two different wavelengths and comparing this sum with the sum of counts of these wavelengths taken simultaneously. The difference is used to calculate photomultiplier tube dead time and improve accuracy of the results.

JP 61 266 925 discloses a double luminous flux measurement system using photoelectric converting element array.

US 5,737,076 A describes a procedure for determining an identification of a sample of material, or its properties. Electromagnetic radiation from a radiation source is reflected or transmitted through the sample. The radiation from the sample is collected and analyzed over several channels which modulate the radiation with a spectral transmission function which is unique for each channel. The modulated radiation is transmitted to one or several detectors which produce output signals which are further electronically processed. The spectral range of each of the individual channels is common to all of the channels. Within the common range the channels are provided with different spectral transmission functions which are optimally chosen for a given application.

US 3,846,024 A discloses an optical alignment system for optical spectrometers and comprises means for maintaining proper alignment of a direction grating with respect to a focal curve having entrance and exit slits.

US 6198,531 B1 discloses an embodiment of an optical analysis system for determining an amplitude of a principal component of an optical signal. The known optical analysis system is part of a spectroscopic analysis system suited for, e.g., analyzing which compounds are comprised at which concentrations in a sample. It is well known that light interacting with the sample carries away information about the compounds and their concentrations. The underlying physical processes are exploited in optical spectroscopic techniques in which light of a light source such as, e.g., a laser, a lamp or light emitting diode is directed to the sample for generating an optical signal which carries this information.

For example, light may be absorbed by the sample. Alternatively or in addition, light of a known wavelength may interact with the sample and thereby generate light at a different wavelength due to, e.g. a Raman process. The transmitted and/or generated light then constitutes the optical signal which may also be referred to as the spectrum. The relative intensity of the optical signal as function of the wavelength is then indicative for the compounds comprised in the sample and their concentrations.

To identify the compounds comprised in the sample and to determine their concentrations the optical signal has to be analyzed. In the known optical analysis system the optical signal is analyzed by dedicated hardware comprising an optical filter. This optical filter has a transmission which depends on the wavelength, i.e. it is designed to weight the optical signal by a spectral weighting function which is given by the wavelength dependent transmission. The spectral weighting function is chosen such that the total intensity of the weighted optical signal, i.e. of the light transmitted by the filter, is directly proportional to the concentration of a particular compound. Such an optical filter is also denoted as multivariate optical element (MOE). This intensity can then be conveniently detected by a detector such as, e.g., a photodiode. For every compound a dedicated optical filter with a characteristic spectral weighting function is used. The optical filter may be, e.g., an interference filter having a transmission constituting the desired weighting function.

For a successful implementation of this analysis scheme it is essential to know the spectral weighting functions. They may be obtained, e.g., by performing a principal component analysis of a set comprising N spectra of N pure compounds of known concentration where N is an integer. Each spectrum comprises the intensity of the corresponding optical signal at M different wavelengths where M is an integer as well. Typically, M is much larger than N. Each spectrum containing M intensities at corresponding M wavelengths constitutes an M dimensional vector whose M components are these intensities. These vectors are subjected to a linear-algebraic process known as singular value decomposition (SVD) which is at the heart of principal component analysis and which is well understood in this art.

As a result of the SVD a set of N eigenvectors $z_n$ with n being a positive integer smaller than N+1 is obtained. The eigenvectors $z_n$ are linear combinations of the original N spectra and often referred to as principal components or principal component vectors. Typically, the principal components are mutually orthogonal and determined as normalized vectors with $|z_n|=1$. Using the principal components $z_n$, the optical signal of a sample comprising the compounds of unknown concentration may be described by the combination of the normalized principal components multiplied by the appropriate scalar multipliers:

$$x_1 z_1 + x_2 z_2 + \ldots + x_n z_n,$$

The scalar multipliers $x_1$ to $x_n$ with n being a positive integer smaller than N+1 may be considered the amplitudes of the principal components $z_n$ in a given optical signal. Each multiplier $x_n$ can be determined by treating the optical signal as a vector in the M dimensional wavelength space and calculating the direct product of this vector with a principal component vector $z_n$.

The result yields the amplitude $x_n$ of the optical signal in the direction of the normalized eigenvector $z_n$. The amplitudes $x_n$ correspond to the concentrations of the N compounds:

In the known optical analysis system the calculation of the direct product between the vector representing the optical signal and the eigenvector representing the principal component is implemented in the hardware of the optical analysis system by means of the optical filter. The optical filter has a transmittance such that it weights the optical signal according to the components of the eigenvector representing the principal component, i.e. the principal component vector constitutes the spectral weighting function. The filtered optical signal can be detected by a detector which generates a signal with an amplitude proportional to the amplitude of the principal component and thus to the concentration of the corresponding compound.

In a physical sense, each principal component is a constructed "spectrum" with a shape in a wavelength range within the optical signal. In contrast to a real spectrum, a principal component may comprise a positive part in a first spectral range and a negative part in a second spectral range. In this case the vector representing this principal component has positive components for the wavelengths corresponding to the first spectral range and negative components for the wavelengths corresponding to the second spectral range.

In an embodiment the known optical analysis system is designed to perform the calculation of the direct product between the vector representing the optical signal and the eigenvector representing the principal component in the hardware in cases where the principal component comprises a positive part and a negative part. To this end, a part of the optical signal is directed to a first filter which weights the optical signal by a first spectral weighting function corresponding to the positive part of the principal component, and a further part of the optical signal is directed to a second filter which weights the optical signal by a second spectral weighting function corresponding to the negative part of the principal component. The light transmitted by the first filter and by the second filter are detected by a first detector and a second detector, respectively. The signal of the second detector is then subtracted from the signal of the first detector, resulting in a signal with an amplitude corresponding to the concentration.

In another embodiment the known optical analysis system is able to determine the concentrations of a first compound and of a second compound by measuring the amplitudes of a corresponding first principal component and of a second principal component. To this end, a part of the optical signal is directed to a first filter which weights the optical signal by a first spectral weighting function corresponding to the first principal component, and a further part of the optical signal is directed a second filter which weights the optical signal by a second spectral weighting function corresponding to the second principal component. The light transmitted by the first filter and by the second filter are detected by a first detector and a second detector, respectively. The signal of the first detector and of the second detector correspond to the first and second spectral weighting functions, respectively.

Especially, when the optical analysis system is dedicated to determine the concentration of a single compound of a substance, like e.g. glucose concentration in blood, it is advantageous to make use of a corresponding optical filter, that is designed for the spectral weighting function of this particular compound. Such dedicated optical filters can be realized in a cost efficient way because they do not have to provide reconfigurable transmission or absorption properties. Optical analysis systems dedicated for determination of the concentration of a particular compound may therefore be implemented on the basis of a low-cost MOE, that can be implemented on the basis of a dispersive optical element, such as a prism or a grating and a corresponding optical filter providing a spatial transmission pattern.

Here, an optical signal received from a sample carrying spectral components being indicative of the composition of the sample is incident on the dispersive optical element. By means of the dispersive optical element, the incoming optical signal is spatially decomposed into various spectral components. Hence, the dispersive optical element serves to spatially separate the spectral components of the incident optical signal. Preferably, the evolving spectrum spreads along a direction specified by the dispersive optical element. For example, the spectrum might spread along a first direction, e.g. horizontally.

Making use of a dedicated spatial transmission mask inserted into the optical path of the spectrum, dedicated spectral components of the evolving spectrum can be attenuated or even entirely blocked. Therefore, the spatial transmission mask has to provide a plurality of areas featuring different transmission properties. When the spectrum is spread in a horizontal direction, these areas are the spatial transmission mask, have to be aligned horizontally, thereby providing a uniform transmission in the vertical direction.

Additionally, by uniformly expanding the spectrum in a vertical direction, the spatial transmission mask might be divided in two sections being aligned in a vertical direction. Each section may then feature different spatial transmission patterns allowing to simultaneously manipulate the spectrum in two different ways.

Consequently, the upper section of the spatial transmission mask effectively serves as a first spectral weighting function whereas the lower section of the spatial transmission mask may provide a second spectral weighting function. By separately detecting these two differently manipulated spectra, positive and negative parts of a principle component can be separately detected, thus allowing for an effective and sufficient data processing in order to determine an amplitude corresponding to the concentration of the dedicated compound. For example, by mutually subtracting positive and negative part of the spectral weighting function, a signal being indicative of the compounds' concentration might be precisely derived.

Usage of dedicated spatial transmission masks in combination with dispersive optical elements effectively provides a low-cost implementation of an optical analysis system. Implementation of the spatial transmission mask as a non-reconfigurable patterned neutral density filter therefore provides an efficient and low cost approach for analyzing a single dedicated compound.

In such an implementation only the patterned structure of the spatial transmission mask defines positive and negative parts of a dedicated spectral weighting function. Hence, only the transmission pattern of a spatial transmission mask is specific for analysis of a particular compound. These low-cost implementations of the optical analysis system are principally limited to concentration determination of a single compound. Moreover, in these dispersive spectroscopic arrangements the relative positioning between the evolving spectrum and the spatial transmission mask is rather critical. Hence, already a slight displacement of the spatial transmission mask may seriously affect the obtained result.

The present invention therefore aims to provide a calibration mechanism and a calibration method for optical analysis systems making use of multivariate optical elements.

The present invention provides an optical analysis system as claimed in claim 1. The optical analysis system comprises a dispersive optical element, spatial light manipulation means, at least a first calibration segment at a first position on the spatial light manipulation means, at least a first detector and means for modifying the relative position of the spatial light manipulation means with respect to the orientation of the dispersive optical element. Modification of the relative position of the spatial light manipulation means either refers to a shifting of the spatial light manipulation means or to a modification of the orientation or position of the dispersive optical element. The dispersive optical element serves to spatially separate the spectral components of the optical signal, preferably along a first direction. For example, the dispersive optical element can be implemented by means of a grating or a prism.

The incident optical signal, typically in form of a light beam is then spatially spread either in a transmission or reflection geometry. The various spectral components of the optical signal can thus be selectively manipulated by means of the spatial light manipulation means. Typically, the spatial light manipulation means is implemented as a spatial transmission mask, such as a neutral density filter featuring various areas of variable transmission. Typically, these areas of variable transmission are arranged along the first direction in order to attenuate or to block specific spectral components of the optical signal.

Typically, the spatial light manipulation means are implemented as a single or a combination of a plurality of neutral density filters that are particularly designed for realizing negative and/or positive parts of a spectral weighting function. Since the position of the spatial light manipulation means is critical for the reliability of the obtained results, the inventive optical analysis system makes use of a reference optical signal being provided by the optical signal itself or that is provided by means of an additional reference optical source. For example, a particular spectral component of the optical signal featuring a specific wavelength may serve as the reference optical signal. This is preferably applicable, when the optical source is implemented as a broad band light source with a number of characteristic spectral components, like e.g. spectral lines of a gas discharge lamp.

According to a further embodiment of the invention, the optical analysis system further comprises a reference optical source for generating the reference optical signal. In this way, the reference optical signal is provided by a specific reference optical source. In principle, this reference optical source can be implemented by any type of optical source whose intensity and spectral distribution is known. Moreover, for properly aligning the spatial light manipulation means, the spatial light manipulation means have at least a first calibration segment at a first position on the spatial light manipulation means. This calibration segment is at least partially transparent for the reference optical signal or for a particular spectral component of the reference optical signal. The at least first detector is further adapted to detect at least a portion of the reference optical signal that is transmitted by the at least first calibration segment on the spatial light manipulation means.

By detecting a portion of the reference optical signal that is transmitted by the at least first calibration segment and having knowledge of the initial intensity of the reference optical source, it can be precisely determined, whether the spatial light manipulation means are correctly mounted into the optical analysis system. Depending on an output signal provided by the at least first detector, the spatial light manipulation means can be moved along at least the first direction, i.e. in the direction of the spectral decomposition of the optical signal, by making use of shifting means.

Preferably, the reference optical source and the at least first detector for detecting a portion of the reference optical signal are mutually arranged in a well defined way. The spatial light manipulation means are inserted into the optical path between the reference optical source and the first detector. The at least first calibration segment is positioned on the spatial light manipulation means in such a way, that a predefined portion of the reference optical signal is transmitted to the at least first detector only when the spatial light manipulation means are in a correct position with respect to the spatial spectral distribution generated by the dispersive optical element.

When for example the spectrum of the optical signal evolves in a horizontal direction, the first calibration segment is positioned at a well defined horizontal position on the spatial light manipulation means. When improperly implemented into the optical path of the optical analysis system, an appreciable amount of the reference optical signal is absorbed or blocked by the spatial light manipulation means. Consequently, the at least first detector only detects an insufficient portion of the reference optical signal, which gives an indication that the spatial light manipulation means is improperly mounted in the optical analysis system.

The accurate positioning of the spatial light manipulation means is extremely relevant for a reliable operation of the optical analysis system. Hence, a calibration mechanism has to provide accurate positioning of the spatial light manipulation means with respect to the spatial distribution of the spectral components of the optical signal. By providing an optical analysis system with such a calibration mechanism, a plurality of different compound specific spatial light manipulation means can be implemented and used with the optical analysis system. In this way, the optical analysis system is by no means restricted to determine the concentration of a single dedicated compound of a sample.

Moreover, by replacing a spatial transmission mask being specific for a first compound by another spatial transmission mask featuring a different spatial transmission pattern and being therefore specific for a second compound, the optical analysis system can be arbitrarily adapted in order to generate an output being specific of a large variety of different compounds. By realizing a modular concept, where different compound specific spatial transmission masks can be implemented into the optical analysis system as modules, the optical analysis system and various compound specific spatial light manipulation means can be separately commercially distributed. An end user may then arbitrarily configure the optical analysis system in order select a particular compound to be analyzed. This implies, that the spatial light manipulation means, e.g. in form of spatial transmission masks, have to be inserted and removed into and from the optical analysis system. This interchangeability of various spatial transmission masks particularly requires sufficient calibration of the optical analysis system that is provided by the present invention.

Providing each of the interchangeable light manipulation means with an at least first calibration segment and making use of dedicated reference optical signals and reference signal detector, an improper positioning of the spatial light manipulation means, i.e. a calibration mismatch, can be precisely detected and corrected.

According to the invention, also the spectral components of the reference optical signal are spatially separated by means of the dispersive optical element. Additionally, the at least first calibration segment is implemented as a slit along a second direction. This second direction is substantially perpendicular to the first direction specified by spatial divergence of the spectrum produced by the dispersive optical element. Preferably, the reference optical signal co-propagates with the incident optical signal.

In this way, both the optical signal as well as the reference signal are spatially dispersed by means of the same dispersive optical element. Consequently, two different spectra are generated, one of which being indicative of the spectral components of the optical signal whereas the other one is indicative of the spectral components of the reference optical signal. Since the reference optical signal has a known spectral distribution and since the intensity of the reference optical signal or the intensity of a particular spectral component of the reference optical signal is known, the accurate positioning of the spatial light manipulation means can be effectively controlled by measuring the transmitted intensity of this particular spectral component of the reference optical signal.

Therefore, the at least first calibration segment has a dedicated position along the first direction on the spatial light manipulation means. When mounted into the optical analysis system this position of the at least first calibration segment corresponds to the position of the particular spectral component of the reference optical signal. Typically, the at least first calibration segment is highly transparent for this particular spectral component of the reference optical signal. Hence, the particular spectral component of the reference optical signal is effectively transmitted by the calibration segment of the spatial light manipulation means and can be sufficiently detected by means of the at least first detector. Making use of the known intensity and the spectral composition of the reference light source the intensity of the particular spectral component of the reference optical signal can be calculated and be compared with a corresponding measured spectral component and thus gives therefore a measure of an accurate positioning of the spatial light manipulation means.

Alternatively, instead of making use of the known intensity and the spectral composition of the reference light source, the relative position of the spatial light manipulation means can be modified in order to maximize the transmitted intensity of the spectral component of the reference light source.

For example, when the spectrum of the optical signal and the spectrum of the reference optical signal spreads in a horizontal direction, the spatial light manipulation means have to be accurately positioned in a horizontal direction. In this configuration the at least first calibration segment is preferably implemented as a vertical slit at a distinct horizontal position on the spatial light manipulation means. The slit width shall then correspond to the spectral width of a particular spectral component of the reference optical signal or it may correspond to the spectral resolution of the optical analysis system. For example, by implementing the reference optical source by means of a gas discharge lamp based on a noble gas like neon, the width of the slit shall preferably correspond to the spectral width of a particular line of the neon spectrum. Having knowledge of the intensity of this particular neon line and by measuring the portion transmitted by the calibration segment, it can be sufficiently concluded whether the entire or only a part of this particular transmission line is transmitted by the calibration segment. In case that this particular transmission line is partly blocked by the calibration segment, the spatial light manipulation means is not properly mounted in the optical analysis system and therefore needs to be horizontally shifted.

By successively horizontally shifting the spatial light manipulation means and simultaneously monitoring the intensity of the transmitted neon line, a maximum of the transmitted intensity might be measured. The horizontal position of the spatial light manipulation means that correspond to the maximum intensity of the transmitted neon line is then indicative of the accurate horizontal position of the spatial light manipulation means.

Since the spectrum generated by the dispersive optical element strongly diverges as the spectrum further propagates, the spatial light manipulation means always have to be inserted into the optical path at a defined distance from the dispersive optical element. A longitudinal displacement of the spatial light manipulation means severely influences the reliability of the entire optical analysis system because the horizontal width of the spatial transmission pattern would then no longer correspond to the horizontal width of the evolving spectrum.

According to a further preferred embodiment of the invention, the spatial light manipulation means further comprise at least a second calibration segment at a second position on the spatial light manipulation means. This second calibration segment is at least partially transparent for a second spectral component of the reference optical signal. In this way not only a single spectral component of the reference optical signal but also a second spectral component of the reference optical signal can be sufficiently detected. Preferably, this second spectral component of the reference optical signal being transmitted by the second calibration segment of the spatial light manipulation means is detected by means of a second detector. Consequently, first and second spectral components of the reference optical signal can be detected simultaneously.

Only in case that both measured spectral components of the reference optical signal correspond to a predetermined value, the spatial light manipulation means is located at an accurate position. In such cases, where only one of the two measured spectral components of the reference optical signal corresponds to a predefined value, the spatial light manipulation means is inaccurately positioned with respect to the distance from the dispersive optical element. Hence, the spectrum being incident on the spatial light manipulation means does not match the spatial light transmission pattern of the spatial light manipulation means. In such cases, where both detected reference signals do not match a predefined intensity value the spatial light manipulation means may have to be transversally shifted.

According to a further preferred embodiment of the invention, the reference optical signal propagates in a reference plane and the optical signal propagates in a spectroscopic plane. The reference plane and the spectroscopic plane are substantially parallel. They are preferably separated along the second direction that is substantially perpendicular to the first direction specified by the divergence of the spectrum. Assuming that the spectral components of the optical signal and the reference optical signal are separated in a horizontal direction, the reference plane and the spectroscopic plane are vertically shifted with respect to each other.

Hence, the optical signal and the reference signal propagate in a parallel way but in vertically shifted propagation planes. Correspondingly, the calibration segment features a different vertical position on the spatial light manipulation means as the spatial light transmission pattern representing positive or negative parts of the spectral weighting function. Additionally, the at least first detector for detecting the intensity of the transmitted reference optical signal is vertically displaced with respect to the detectors that are dedicated for spectroscopic analysis. In this way, the spectra of the optical signal and the reference optical signal do not interfere. In this way, it can be effectively guaranteed, that the at least first detector dedicated for calibration of the optical analysis system only detects optical radiation emanating from the reference optical source.

Preferably, the at least first detector for detecting the intensity of the transmitted reference optical signal is implemented as a low-cost semi conductor based photodiode. Generally, it does not have to provide any spatial resolution.

The at least first detector is implemented as a split detector having at least two detector segments that are separated along the second direction. Additionally, the at least first calibration segment is implemented as a slit that is tilted with respect to the second direction. Presuming for example that the spectrum provided by the dispersive optical element diverges in a horizontal direction, the at least first slit is tilted with respect to the vertical direction and the split detector features an upper and a lower segment. By means of this embodiment, the magnitude of position mismatch of the spatial light manipulation means can be determined within a relatively large range. For example, assuming a vertical orientation of the slit having a width that exactly corresponds to the width of the spectral reference line a horizontal displacement of the light manipulation means can only be detected when the mismatch is smaller then the width of the slit. For a larger mismatch the at least first detector might not be able to detect a significant intensity.

By tilting the calibration segment, i.e. the slit, with respect to the vertical direction, a larger spectral range can be effectively detected by means of the at least first detector. Making additionally use of a split detector featuring vertically aligned detector segments, the magnitude of the horizontal position mismatch of the spatial light manipulation means can be sufficiently determined.

According to a further preferred embodiment of the invention, the at least first detector is further adapted to detect at least a portion of the modulated spectral components of the optical signal. Additionally, the optical analysis system further comprises means for shifting the spatial light manipulation means along the second direction. In this embodiment the reference optical signal is effectively replaced by the optical signal itself. Hence, a dedicated spectral component of the optical signal is effectively used as reference optical signal. Correspondingly, the reference optical source is effectively realized by the optical source generating the optical signal, such as a spectroscopic excitation light source.

For example, when the optical analysis system is dedicated to provide spectroscopic analysis of Raman shifted spectroscopic optical signals, a particular spectral component of elastically scattered light could be used as a reference optical signal. Since in this embodiment the reference plane and the spectroscopic plane inevitably overlap, it is reasonable to perform calibration and spectroscopic analysis sequentially. Assuming e.g. a horizontal divergence of the spectrum, the spatial light manipulation means may comprise a calibration section and two vertically adjacent light transmission patterns for positive and negative regression. A horizontal calibration of the spatial light manipulation means can then be realized by vertically shifting the calibration section of the spatial light manipulation means into the optical path. By moving the calibration section into the optical path, a sufficient calibration can be performed by horizontally shifting the light manipulation means into an accurate position. Thereafter, the spatial light manipulation means may be vertically shifted in order to move the weighting sections of the spatial light manipulation means into the optical path.

According to a further preferred embodiment of the invention, the optical analysis system further comprises control means for analyzing the output of the at least first detector and for shifting the spatial light manipulation means along the first and / or second direction in response to the output signal of the at least first detector. Preferably, the means for shifting the spatial light manipulation means are implemented as a kind of actuator device that can be electrically controlled. Moreover, the control means might be implemented as an electrical control loop that might incorporate digital signal processing means for comparing the at least one detector output with predefined values.

According to a further preferred embodiment of the invention, the at least first detector is integrated into the spatial light manipulation means. In this way transmitted portions of the reference optical signal do not have to be focused to the at least first detector. Also, the at least first detector does not have to be separately mounted at a particular position in the setup of the optical analysis system. By integrating the at least first detector directly into the spatial light manipulation means, the at least first detector is automatically at the accurate position.

The invention preferably uses a spatial light modulating mask for an optical analysis system. The optical analysis system has a dispersive optical element for spatially separating spectral components of an optical signal in a first direction. The spatial light modulating mask comprises an intensity modulating pattern for modulating at least one spectral component of the optical signal and at least a first calibration segment at a first position. This first position is fixed with respect to the intensity modulating pattern preferably along the first direction.

For example, when the spectral components of the optical signal are spread horizontally, the at least first calibration segment defines a fixed horizontal position on the spatial light modulating mask. The at least first calibration segment is at least partially transparent for a reference optical signal or at least a particular spectral component of the reference optical signal. Having knowledge of the intensity of at least a particular spectral component of the reference optical signal, the at least first calibration segment can be effectively used to accurately place the spatial light modulation mask in an optical analysis system.

According to a further preferred embodiment of the invention, the spatial light modulating mask comprises a first section providing a first intensity modulating pattern, a second section providing a second intensity modulating pattern and a third section that provides the at least first calibration segment. Preferably, the spatial light modulating mask is part of a multivariate optical element (MOE) and the first and second section effectively provide spectral attenuation of various spectral components of the optical signal corresponding to first and second parts of a spectral weighting function, respectively.

In still another aspect, the invention provides a method of calibrating of an optical analysis system as claimed in claim 8. The optical analysis system has a dispersive optical element for spatially separating spectral components of an optical signal in a first direction. The method of calibrating comprises the steps of inserting a spatial light modulating mask into the optical analysis system, applying a reference optical signal onto the spatial light modulating mask, determining a portion of at least a first spectral component of the reference optical signal that is transmitted by at least a first calibration segment of the spatial light modulating mask and analyzing the detected portion of the at least first spectral component of the reference optical signal in order to shift the spatial light manipulation means along the first direction.

The method makes preferably use of spectrally dispersing the reference optical signal in order to provide a dedicated spectral component of the reference optical signal at a specific position. This specific position exactly matches the position of the calibration segment only when the entire spatial light modulating mask is accurately positioned in the optical analysis system. Therefore, the at least first calibration segment is at least partially transparent for the distinct spectral component of the reference optical signal and a first detector is particularly adapted to determine the intensity of the transmitted spectral component of the reference optical signal.

The method of calibrating of an optical analysis system is preferably applicable with optical analysis systems making use of multivariate optical elements for determination of a concentration of a particular compound in a sample. The spatial light modulating mask is a key element of a MOE and is specific for a single compound that can be principally analyzed by means of the optical analysis system. Various different spatial light modulating masks might be separately distributed with the optical analysis system allowing to adapt the optical analysis to various compounds.

Further it is to be noted, that any reference signs in the claims are not to be construed as limiting the scope of the present invention.

In the following examples and preferred embodiments of the invention will be described in detail by making reference to the drawings in which:

Figure 1: is a schematic diagram of an embodiment of a blood analysis system,

Figures 2a and 2b: are spectra of the optical signal generated from blood in the skin and from a sample comprising one analyte in a solution,

Figure 3: is a spectral weighting function implemented in a multivariate optical element,

Figure 4: shows a schematic top view illustration of the optical analysis system,

Figure 5: shows a perspective illustration of the spatial light modulating mask and corresponding detectors,

Figure 6: schematically shows an example making use of split detectors,

Figure 7: shows an embodiment implementing split detectors and tilted calibration segments,

Figure 8: shows two split detectors implemented into the transmission mask,

Figure 9: illustrates an example of the transmission mask that is applicable for a sequential calibration mode.

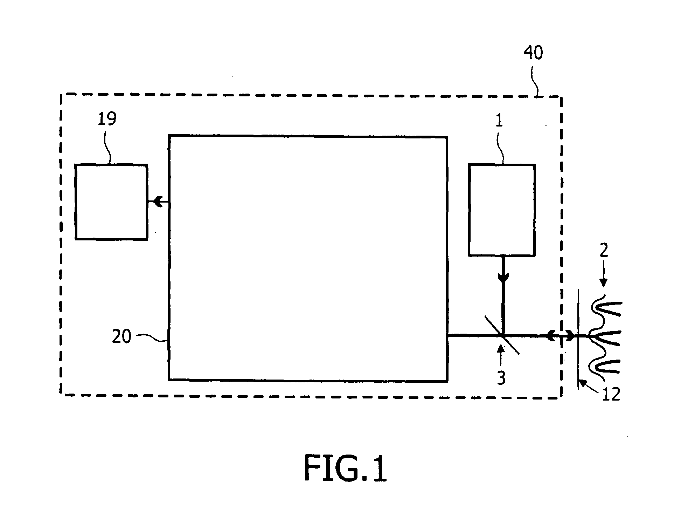

In the embodiment shown in figure 1 the optical analysis system 20 for determining an amplitude of a principal component of an optical signal comprises a light source 1 for providing light for illuminating a sample 2 comprising a substance having a concentration and thereby generating the principal component. The amplitude of the principal component relates to the concentration of the substance. The light source 1 is a laser such as a gas laser, a dye laser and/or a solid state laser such as a semiconductor or diode laser. In particular, when the optical analysis system is used for applications in the field of e.g. absorption spectroscopy or diffusive reflection spectroscopy, the light source 1 can also be implemented on the basis of an incandescent lamp.

The optical analysis system 20 is part of a blood analysis system 40. The blood analysis system further comprises a computational element 19 for determining the amplitude of the principal component, hence for determining the composition of the compound. The sample 2 comprises skin with blood vessels. The substance may be one or more of the following analytes: glucose, lactate, cholesterol, oxy-hemoglobin and/or desoxy-hemoglobin, glycohemoglobin (HbA1c), hematocrit, cholesterol (total, HDL, LDL), triglycerides, urea, albumin, creatinin, oxygenation, pH, bicarbonate and many others. The concentrations of these substances is to be determined in a non-invasive way using optical spectroscopy. To this end the light provided by the light source 1 is sent to a dichroic mirror 3 which reflects the light provided by the light source towards the blood vessels in the skin. The light may be focused on the blood vessel using an objective 12. The light may be focused in the blood vessel by using an imaging and analysis system as described in the international patent application WO 02/057759.

By interaction of the light provided by the light source 1 with the blood in the blood vessel an optical signal is generated due to Raman scattering and fluorescence. The optical signal thus generated may be collected by the objective 12 and sent to the dichroic mirror 3. The optical signal has a different wavelength than the light provided by the light source 1. The dichroic mirror is constructed such that it transmits at least a portion of the optical signal.

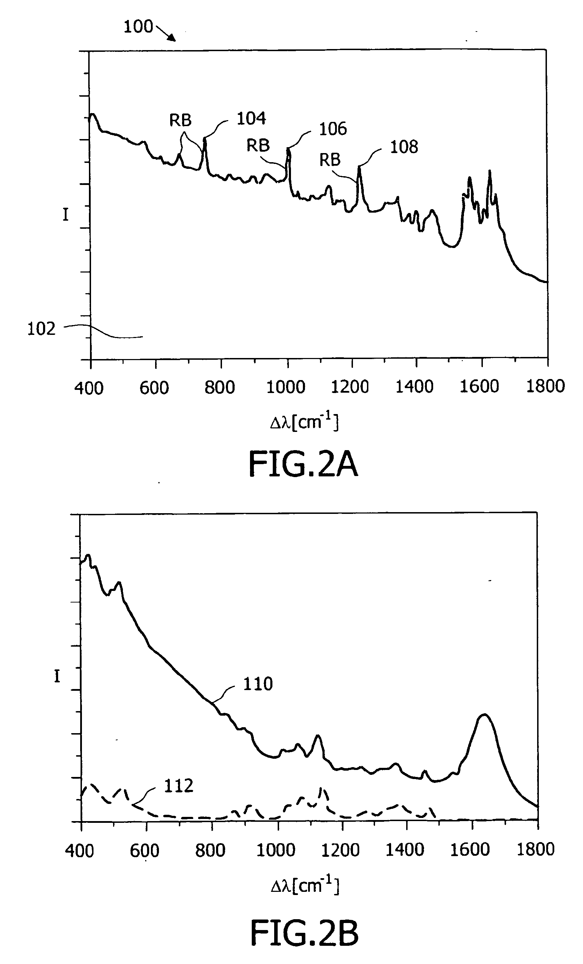

A spectrum 100 of the optical signal generated in this way is shown in figure 2A.. The spectrum comprises a relatively broad fluorescence background (FBG) 102 and relatively narrow Raman bands (RB) 104, 106, 108. The x-axis of figure 2A denotes the wavelength shift with respect to the 785 nm of the excitation by light source 1 in wave numbers, the y-axis of figure 2A denotes the intensity in arbitrary units. The x-axis corresponds to zero intensity. The wavelength and the intensity of the Raman bands, i.e. the position and the height, is indicative for the type of analyte as is shown in the example of figure 2B for the analyte glucose which was dissolved in a concentration of 80 mmol in water. The solid line 110 of figure 2B shows the spectrum of both glucose and water, the dashed line 112 of figure 2B shows the difference between the spectrum of glucose in water and the spectrum of water without glucose. The amplitude of the spectrum with these bands is indicative for the concentration of the analyte.

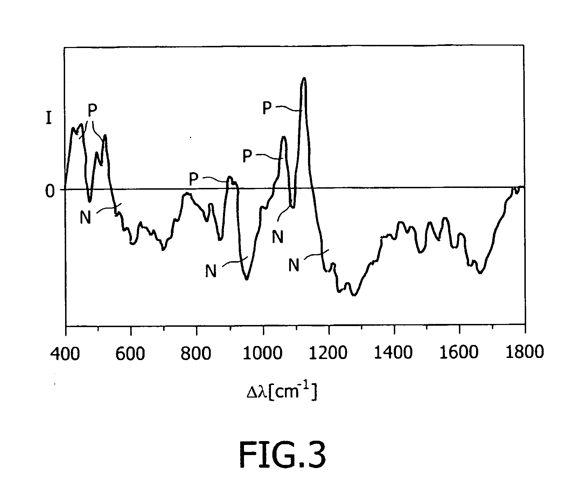

Because blood comprises many compounds each having a certain spectrum which may be as complex as that of figure 2B, the analysis of the spectrum of the optical signal is relatively complicated. The optical signal is sent to the optical analysis system 20 according to the invention where the optical signal is analyzed by a MOE which weighs the optical signal by a weighting function shown e.g. schematically in figure 3. The weighting function of figure 3 is designed for glucose in blood. It comprises a positive part P and a negative part N. The positive part P and the negative part N each comprise in this example more than one spectral band.

Here and in the remainder of this application the distance between a focusing member and another optical element is defined as the distance along the optical axis between the main plane of the focusing member and the main plane of the other optical element.

A computational element 19 shown in figure 1 is arranged to calculate the difference between the positive and negative signal. This difference is proportional to the amplitude of the principal component of the optical signal. The amplitude of the principal component relates to the concentration of the substance, i.e. of the analyte. The relation between the amplitude and the concentration may be a linear dependence.

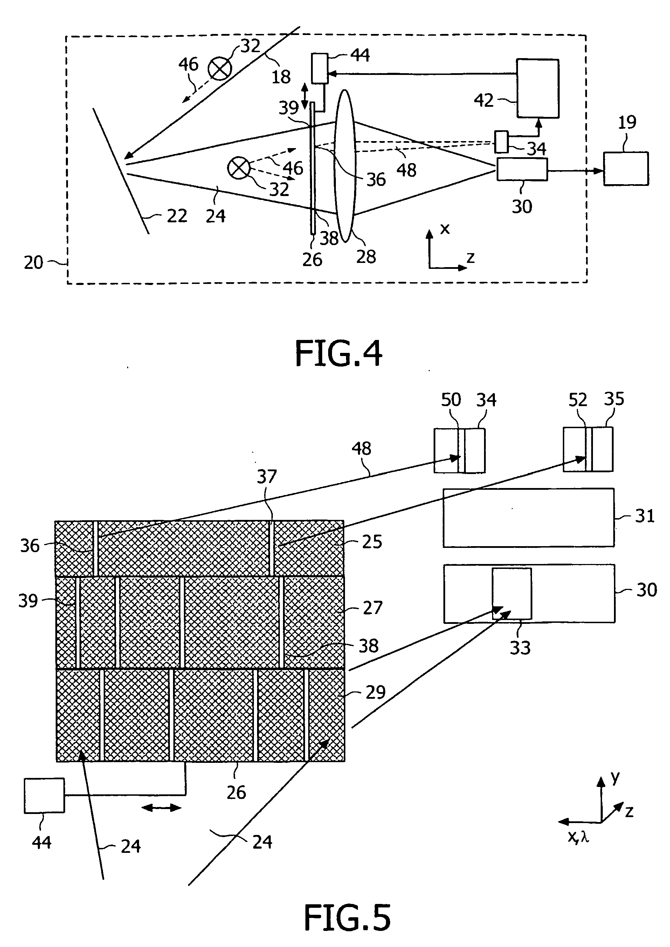

Figure 4 schematically shows a top view illustration of the optical analysis system 20. The optical analysis system 20 is adapted to receive an incident optical beam 18 and to provide an electronic output to the computational element 19. The optical analysis system 20 has a grating 22 serving as a dispersive optical element, a transmission mask 26, a focusing element 28 and a detector 30. In essence, the grating 22 in combination with the transmission mask 26 serve as a multivariate optical element (MOE).

In this way dedicated spectral components of the incident optical beam 18 can be filtered and arbitrarily attenuated. By focusing the spectrally modified optical beam 18 onto the detector 30, a concentration of a particular compound of a substance can be precisely determined. The transmission pattern of the transmission mask 26 corresponds to a spectral weighting function that is specific for each compound to be analyzed by the optical analysis system 20. Typically, the detector 30 is implemented by means of a semi conductor based photodiode.

The invention effectively allows to determine the concentration of a compound without particularly performing a complete spectral analysis of the incident light beam 18. Hence, by making efficient use of the MOE, a rather expensive charge coupled device (CCD) for recording a complete spectrum 24 of the optical beam 18 can be effectively replaced by a low cost photodiode detector 30. The intensity detected by means of the detector 30 is indicative of a positive and/or negative regression function realized by the transmission mask 26. By separately detecting positive and negative parts of a spectral regression function, the concentration of a compound can be precisely determined. Therefore, the detector 30 is coupled to the computational element 19 in order to provide necessary signal processing.

The optical analysis system 20 further has a light source 32 acting as reference light source producing light beams 46. This light source can be in principle installed anywhere in the optical analysis system 20 as long as its emanating light beams 46 are incident in the plane of the transmission mask. Preferably, the light source 32 is positioned such that an optical reference signal 46 propagates in much the same way as the incident optical beam 18. Preferably, the reference optical beam 46 is also incident on the grating 22 and becomes spectrally distributed along the x-direction. The optical analysis system 20 further has a detector 34 that is coupled to a calibration unit 42, which in turn controls an actuator 44 that is adapted to shift the transmission mask 26 along the x-direction.

Preferably, the transmission mask 26 features numerous slits 36, 38, 39 for at least partially transmitting dedicated spectral components of either the reference spectrum 46 or the spectrum 24 of the optical beam 18. Here, the slit 36 serves as a calibration segment and is adapted to transmit a particular spectral component of the reference optical beam 46. When the reference optical beam 46 is also spectrally dispersed by means of the grating 22, this particular spectral component is incident on the transmission mask 26 at a distinct vertical position, i.e. position along the x-direction. When now in turn the position of this particular spectral reference component matches the position of the slit 36, the spectral reference component is completely transmitted by the transmission mask 26 and can be detected by means of the detector 34. The detected spectral component is then transformed into an electrical signal that is transmitted to the calibration unit 42.

Having knowledge of the spectral distribution of the reference source 32 and the corresponding intensity of the various spectral components of a reference optical signal 46, a maximum intensity that might be detected by means of the detector 34 can be precisely determined. Comparison of the estimated intensity value of a particular spectral component with the measured value gives a reliable indication, whether the transmission mask 26 is accurately positioned in the x-direction. If the measured value of the transmitted intensity of this particular spectral component deviates from the expected maximum value, the calibration unit 42 may invoke a vertical scanning, i.e. scanning in x-direction of the transmission mask 26. By simultaneously recording corresponding intensity values, the accurate position of the transmission mask 26 that corresponds to a maximum of transmitted light intensity can be determined.

Determination of a maximum intensity transmitted through the slit aperture 36 of the transmission mask 26 can also be performed without having knowledge of the spectral distribution and spectral intensity of the reference light source. A vertical scanning, i.e. scanning in the x-direction of the position of the transmission mask 26 allows to retrieve a position for which the intensity transmitted through the slit aperture 36 maximizes. This position of maximum transmitted intensity is then refers to the accurate relative position of the transmission mask with respect to the orientation of the dispersive optical element.

In this way a plurality of different compound specific transmission masks can be universally combined with the optical analysis system 20, thus allowing for precise concentration determination of various compounds. By providing each of the variety of calibration masks 26 with a calibration segment, an accurate positioning of any transmission mask 26 can be guaranteed.

The reference light source 32 can be implemented by e.g. a gas discharge lamp, a light emitting diode (LED), a laser light source or some other light source that provides a well defined intensity of at least a particular spectral component.

Figure 5 shows a perspective illustration of an arrangement of a transmission mask 26 and a variety of detectors 34, 31, 30. In this illustration the spectral distribution 24 of the incident optical beam is shown in a horizontal direction (x). The various detectors 30, 31, 34 as well as various sections 29, 27, 25 of the transmission mask 26 are arranged vertically, e.g. in the y-direction. The remaining z-direction specifies the direction of propagation of the optical signals.

The transmission mask 26 features two transmission sections 27, 29, each of which featuring a variety of slits 38, 39 that are at least partially transparent for the corresponding spectral components of the spectrum 24 of the optical beam 18. Hence, a horizontal position of a slit 38, 39 specifies the wavelength of a spectral component of the spectrum 24. The two transmission sections 29, 27 feature various transmission segments 38, 39 for selectively attenuating particular spectral components of the spectrum. The remaining portions of the transmission sections 27, 29 remain substantially non-transparent. Preferably, the horizontal position of the slits 38, 39 correspond to the horizontal position of compound specific Raman bands 104, 106, 108 as shown in Figure 2a. In this way only compound specific spectral bands are transmitted by the transmission mask 26 and are subsequently detected by a corresponding detector 30, 31.

Here, the two differently configured transmission sections 27, 29, serve to provide positive and negative parts of the spectral weighting function. Therefore, light being transmitted by means of transmission section 27 has to be separately detected by means of detector 31 and light that is transmitted through transmission section 29 has to be exclusively detected by means of the detector 30.

Preferably, suitable beam direction means like lenses or a lens system is inserted between the transmission mask 26 and the number of detectors 30, 31, 34 in order to focus the spectrally modulated spectra 24 to a detection area 33 of the detectors 30, 31.

The upper section 25 of the transmission mask 26 serves as a calibration section. Therefore, the calibration section 25 has a first and a second calibration segment 36, 37 that are implemented as vertical slits. The reference optical signal 46 derived from the reference optical source 32 is directed towards the calibration section 25. Preferably, this reference optical signal is also spectrally decomposed in the horizontal x-direction, such that characteristic lines of the reference spectrum are transmitted by means of the two slits 36, 37. The horizontal position of the two slits 36, 37 is well adapted to the spectral composition of the reference light source 32.

A portion 48 of the reference optical signal being transmitted by the slit 36 is detected by means of the first detection area 50 of a first detector 34 and a portion of the reference optical signal being transmitted through the slit 37 is separately detected by means of a second detection area 52 of a second detector 35. Alternatively, both detectors 34, 35 might be implemented by means of a common detector or detector array providing first and second detection areas 50, 52. Given the case that the transmission mask 26 is accurately positioned, a first spectral component of the reference optical signal is entirely transmitted by means of the slit 36 and a second spectral component of the reference optical signal is entirely transmitted by the slit 37. The two entirely transmitted spectral components are then separately detected by means of the detectors 34, 35 and the measured intensity may nearly match the maximum intensity that can be measured.

If any of the two intensities measured by the detectors 34, 35 clearly deviates from the expected maximum intensity, this gives a clear indication, that the transmission mask 26 is not properly aligned and that the optical analysis system is not accurately calibrated. In this case, any of the at least two characteristic spectral components of the reference optical signal is partly blocked by the calibration section 25. For example, the horizontal position of a specific spectral component of the reference optical signal does not entirely match the slits 36 horizontal position.

Given the case, that the intensity measured by detector 34 is near the maximum expected intensity and that the intensity measured by detector 35 clearly deviates from the expected maximum intensity, this gives an indication that the optical analysis system 20 suffers some general calibration problem. Such a scenario may for example occur, when the transmission mask 26 is shifted with respect to the z-direction. Since the spectrum 24 spreads in the x-direction as it propagates in the z-direction, the overall expansion of the spectrum 24 may no longer correspond to the horizontal width of the transmission pattern specified by the transmission sections 27, 29.

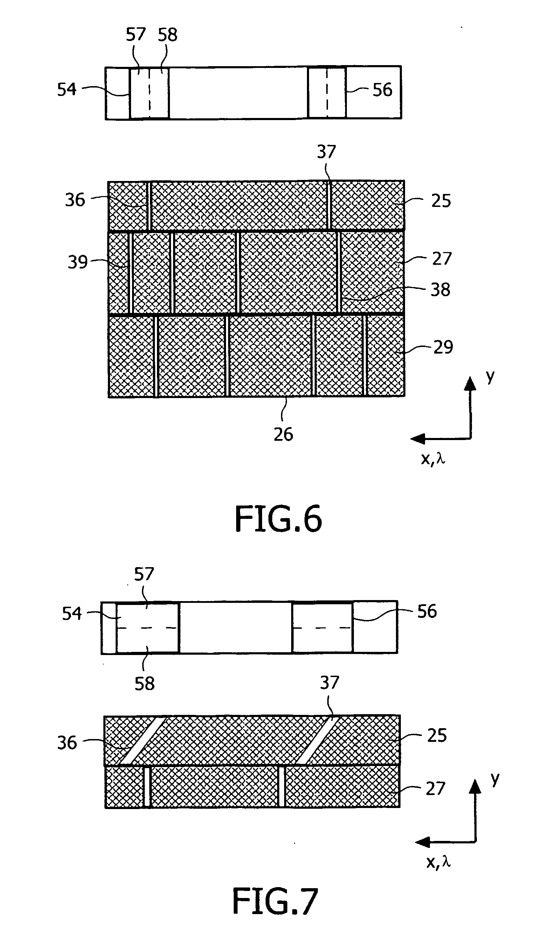

Figure 6 schematically shows an arrangement where the two detectors 34, 35 are implemented as split detectors, each of which featuring horizontally separated split detector segments 57, 58. Additional light shaping or light guiding means are omitted in the illustration. However, when the transmission mask 26 is horizontally shifted, spectral components of the reference optical signal transmitted by the slit 36 will typically non centrally hit the split detector 34. Consequently, either the left 57 or the right 58 split detector segment may receive a larger or a smaller portion of the spectral components intensity. By comparing the two different intensity signals obtained by means of the split detector segments 57, 58 it can be determined whether the transmission mask has to be shifted to the right or to the left in order to match the accurate position.

Figure 7 shows an embodiment making use of split detectors 54, 56 featuring split detector segments 57, 58 that are arranged in a vertical direction. Compared to the embodiment shown in figure 6, the two split detectors 54, 56 are rotated by 90°. Additionally the slits 36, 37 of the calibration segment 25 of the transmission mask 26 are tilted with respect to the vertical direction. In this embodiment even large deviations from the accurate horizontal position of the transmission mask 26 can be detected in order to appropriately shift the transmission mask either to the left or to the right. Here, not only the horizontal width of a slit 36, 37 but moreover the tilt angle of the slits 36, 37 specifies a spectral range that is transmitted by means of the slits 36, 37.

For example, by making use of a neon lamp featuring only a few dedicated characteristic spectral lines, the vertical position where the spectral line is incident on the split detector 54, 57 is directly indicative of a horizontal position mismatch of the transmission mask 26. Typically, when a dedicated spectral line of the reference light source is equally detected by both split detector segments 57, 58, a clear indication is given, that the transmission mask 26 is properly mounted in the optical analysis system.

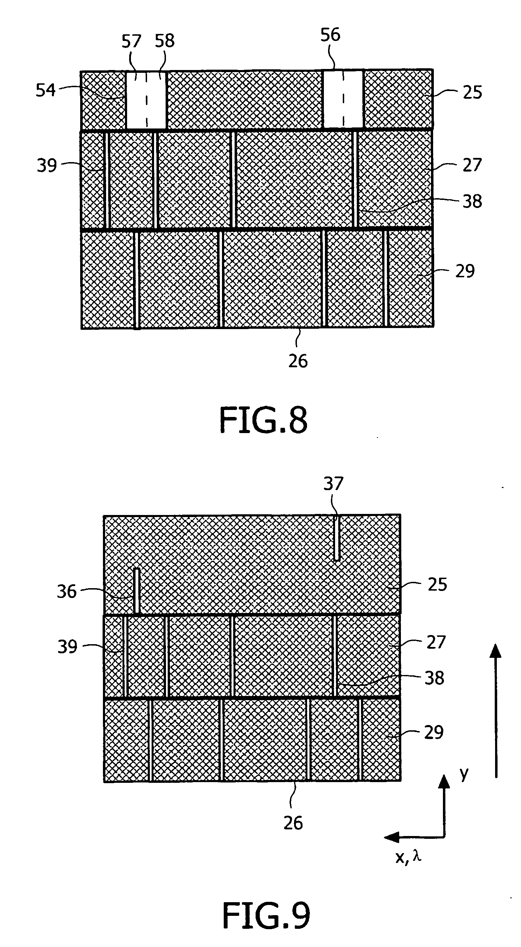

Figure 8 shows an alternative embodiment, where the two split detectors 54, 56 are directly implemented into the calibration section 25 of the transmission mask 26. In this way, reference components do no longer have to be transmitted by the calibration section 25 and an additional focusing arrangement for properly directing the transmitted components onto the detectors 34, 35 as indicated by figure 5 can be left out. Integration of detectors into the calibration section of the transmission mask 26 is preferably performed by making use of split detectors 54, 56 providing also a direction of a potential position mismatch. However, also ordinary photodiodes, such as 34, 35 can be implemented correspondingly.

Figure 9 shows an example of the transmission mask 26, wherein the calibration section 25 features two vertically aligned slits 36, 37, featuring a different vertical position, i.e. y-position. This type of transmission mask 26 can be preferably used for a sequential calibration mode. Here, the optical analysis system 20 further requires means to vertically shift the entire transmission mask 26 as indicated by the arrow. This example of the transmission mask 26 is preferably applicable when the functionality of the reference light source is entirely provided by the optical beam 18 itself. In this case, the optical beam 18 provides at least a first and a second particular spectral component of known intensity or known intensity ratio. Hence, the calibration plane and the spectroscopic plane that were specified by the vertically aligned sections of the transmission mask 26 now substantially overlap.

Preferably, the transmission mask 26 as shown in figure 9 is inserted only partially in the spectrum 24 generated by the grating 22. The transmission mask 26 is inserted into the optical path such that only slit 37 is illuminated by the spectrum. In this way the intensity of a reference spectral component that corresponds to the horizontal position of the slit 37 is analyzed. Thereafter, the transmission mask 26 is moved upwards, such that only the slit 36 is illuminated by the spectrum 24. Correspondingly, a second reference spectral component can be analyzed. By analysis of the detected intensity of the two reference spectral components the accurate position of the transmission mask 26 can be determined. Preferably, after determination of the correct position the transmission mask 26 can be appropriately shifted in order to correctly calibrate the optical analysis system.

Thereafter, the transmission mask 26 is moved upwards, such that transmission section 27 effectively applies a spectral weighting on the spectrum 24. This spectral weighting may for example correspond to the positive part of a spectral weighting function. Subsequently, the transmission mask is successively moved upwards and spectral weighting of the spectrum 24 is performed with respect to the transmission section 29. For example, the negative part of the spectral weighting function is applied to the spectrum.

The sequential shifting of the transmission mask 26 through the propagation plane of the spectrally decomposed optical signal 18 therefore provides sequential calibration of the optical analysis system and sequential recording of positive and negative parts of the spectral regression function. Making use of such an example is certainly a bit more time intensive than usage of the devices illustrated in figure 5 through figure 8. However, by sequentially shifting the transmission mask 26, a dedicated spectral component of the optical input signal 18 can in principle be used as a reference signal. In this way the inventive calibration mechanism can even be implemented without a dedicated reference optical source 32.

Moreover, when the optical analysis system is implemented with two separate detectors that are adapted to simultaneously acquire a positive and a negative spectral weighting function specified by the transmission sections 27, 29, these two detectors may also serve to simultaneously detect a reference optical signal transmitted through the two reference slits 36, 37. Making use of these two detectors, a calibration based on two spectral components of the reference optical signal can be performed in a single step, before the same detectors are used for determination of positive and negative parts of the spectral weighting function.

In principle, the invention provides an efficient way of calibrating an optical analysis system making use of non reconfigurable multivariate optical elements. In particular, the concentration of various compounds of a sample can be determined by replacing compound specific transmission masks 26. Preferably, these compound specific spatial light modulators 26 can be separately distributed and allow a universal adaptation of the optical analysis system to a variety of compounds. Since the accurate positioning of a transmission mask 26 is rather critical for the accuracy of the obtained results, the inventive calibration mechanism serves to detect and to classify a position mismatch and to effectively compensate an improper positioning.

LIST OF REFERENCE NUMERALS

| | |
|---|---|
| 1 | light source |
| 2 | sample |
| 3 | dichroic mirror |
| 12 | objective |
| 18 | optical beam |
| 19 | computational element |
| 20 | optical analysis system |
| 22 | grating |
| 24 | spectrum |
| 25 | calibration section |
| 26 | transmission mask |
| 27 | transmission section |
| 28 | focusing element |
| 29 | transmission section |
| 30 | detector |
| 31 | detector |
| 32 | light source |
| 33 | detection area |
| 34 | detector |
| 36 | slit |
| 38 | slit |
| 37 | slit |
| 39 | slit |
| 40 | blood analysis system |
| 42 | calibration unit |
| 44 | actuator |
| 46 | light beam |
| 48 | light beam |
| 50 | detection area |
| 52 | detection area |
| 54 | split detector |
| 56 | split detector |
| 57 | split detector segment |
| 58 | split detector segment |
| 100 | spectrum |
| 102 | broad fluorescence background |
| 104 | Raman band |
| 106 | Raman band |
| 108 | Raman band |
| 110 | combined spectrum |
| 112 | glucose spectrum |

**Claims**

1. An optical analysis system (20) for determining a principal component of an optical signal (18), the optical analysis system comprising:

   - a dispersive optical element (22) for spatially separating spectral components of the optical signal in a first direction,
   - spatial light manipulation means (26) for modulating the spectral components of the optical signal,
   - at least a first calibration segment (36, 37) at a first position on the spatial light manipulation means, the calibration segment being at least partially transparent for a reference optical signal,
   - at least a first detector (34, 35) for detecting at least a portion of the reference optical signal being transmitted through the at least first calibration segment, wherein the at least first detector is implemented as a segmented detector (54, 56), the segmented detector having at least two detector segments (57, 58) being separated along a second direction, wherein the at least first calibration segment is implemented as a slit, wherein the slit is tilted with respect to the second direction, wherein the width of the slit along the first direction corresponds to the spectral width of a particular spectral component of the reference optical signal, wherein the second direction is substantially perpendicular to the first direction, such that a difference in the intensity detected by the at least two detector segments (57,58) is indicative of a misalignment of the spatial light manipulation means (26) in the first direction,
   - means for modifying the relative position of the spatial light manipulation means with respect to the orientation of the dispersive optical element in response to an output signal of the at least first detector.

2. The optical analysis system (20) according to claim 1, further comprising a reference optical source (32) for generating a reference optical signal.

3. The optical analysis system (20) according to claim 1, wherein the reference optical signal propagates in a reference plane and the optical signal propagates in a spectroscopic plane, the reference plane and the spectroscopic plane being substantially parallel and being separated along the second direction.

4. The optical analysis system (20) according to claim 1, wherein the at least first detector is implemented as a segmented detector (54, 56), the segmented detector having at least two detector segments (57, 58) being separated along the first direction.

5. The optical analysis system (20) according to claim 1, wherein the at least first detector (34, 35) is integrated into the spatial light manipulation means.

6. The optical analysis system (20) according to claim 1, wherein the at least first detector (34, 35) is further adapted to detect at least a portion of the spectral components of the optical signal, the optical analysis system further comprising means for shifting the spatial light manipulation means along the second direction.

7. The optical analysis system (20) according to claim 1, further comprising control means (42) for analyzing an output of the at least first detector and for shifting the spatial light manipulation means (26) along the first and/or second direction in response to the output signal of the at least first detector (34, 35).

8. A method of calibrating of an optical analysis system (20), the optical analysis system having a dispersive optical element (22) for spatially separating spectral components of an optical signal (18) in a first direction, the method of calibrating comprising the steps of:

   - inserting a spatial light modulating mask (26) into the optical analysis system, the spatial light modulating mask having at least a first calibration segment (36, 37),
   - applying a reference optical signal onto the spatial light modulating mask, wherein the at least first calibration segment is implemented as a slit, wherein the slit is tilted with respect to a second direction, wherein the width of the slit along the first direction corresponds to the spectral width of a particular spectral component of the reference optical signal, wherein the second direction is substantially perpendicular to the first direction,
   - determining, by means of an at least first detector (34, 35), a portion of an at least first spectral component of the reference optical signal being transmitted by the at least first calibration segment, wherein the at least first detector is implemented as a segmented detector (54, 56), the segmented detector having at least two detector segments (57, 58) being separated along the second direction,

such that a difference in the intensity detected by the at least two detector segments (57, 58) is indicative of a misalignment of the spatial light manipulation means (26) in the first direction,

- analyzing the detected portion of the at least first spectral component of the reference optical signal on both detector segments of the at least first detector in order to shift the spatial light manipulation means along the first direction,

- shifting the spatial light manipulation means along the second direction until the intensities detected on both segments of the at least first detector match.

**Patentansprüche**

1. Optisches Analysesystem (20) zum Ermitteln einer Hauptkomponente eines optischen Signals (18), wobei das optische Analysesystem Folgendes umfasst:

   - ein dispersives optisches Element (22) zum räumlichen Trennen von Spektralanteilen des optischen Signals in einer ersten Richtung,
   - Mittel zur räumlichen Lichtmanipulation (26) für das Modulieren der Spektralanteile des optischen Signals,
   - mindestens ein erstes Kalibriersegment (36, 37) an einer ersten Position der Mittel zur räumlichen Lichtmanipulation, wobei das Kalibriersegment zumindest teilweise transparent für ein optisches Referenzsignal ist,
   - mindestens einen ersten Detektor (34, 35) zum Detektieren mindestens eines durch das mindestens erste Kalibriersegment übertragenen Teils des optischen Referenzsignals, wobei der mindestens erste Detektor als ein segmentierter Detektor (54, 56) ausgeführt ist, wobei der segmentierte Detektor mindestens zwei Detektorsegmente (57, 58) hat, die entlang einer zweiten Richtung voneinander getrennt sind, wobei das mindestens erste Kalibriersegment als ein Spalt ausgeführt ist, wobei der Spalt in Bezug auf die zweite Richtung geneigt ist, wobei die Breite des Spalts entlang der ersten Richtung der spektralen Breite eines bestimmten Spektralanteils des optischen Referenzsignals entspricht, wobei die zweite Richtung im Wesentlichen senkrecht zu der ersten Richtung verläuft, so dass ein durch die mindestens zwei Detektorsegmente (57, 58) detektierter Intensitätsunterschied auf eine Fehlausrichtung der Mittel zur räumlichen Lichtmanipulation (26) in der ersten Richtung hinweist,
   - Mittel zum Modifizieren der relativen Position der Mittel zur räumlichen Lichtmanipulation in Bezug auf die Orientierung des dispersiven optischen Elements in Reaktion auf ein Ausgangssignal des mindestens ersten Detektors.

2. Optisches Analysesystem (20) nach Anspruch 1, weiterhin mit einer optischen Referenzquelle (32) zum Erzeugen eines optischen Referenzsignals.

3. Optisches Analysesystem (20) nach Anspruch 1, wobei sich das optische Referenzsignal in einer Referenzebene fortpflanzt und das optische Signal sich in einer spektroskopischen Ebene fortpflanzt, wobei die Referenzebene und die spektroskopische Ebene im Wesentlichen parallel verlaufen und entlang der zweiten Richtung getrennt voneinander verlaufen.

4. Optisches Analysesystem (20) nach Anspruch 1, wobei der mindestens erste Detektor als ein segmentierter Detektor (54, 56) ausgeführt ist, wobei der segmentierte Detektor mindestens zwei Detektorsegmente (57, 58) hat, die entlang der ersten Richtung voneinander getrennt sind.

5. Optisches Analysesystem (20) nach Anspruch 1, wobei der mindestens erste Detektor (34, 35) in die Mittel zur räumlichen Lichtmanipulation integriert ist.

6. Optisches Analysesystem (20) nach Anspruch 1, wobei der mindestens erste Detektor (34, 35) weiterhin vorgesehen ist, um mindestens einen Teil der Spektralanteile des optischen Signals zu detektieren, wobei das optische Analysesystem weiterhin Mittel zum Verschieben der Mittel zur räumlichen Lichtmanipulation entlang der zweiten Richtung umfasst.

7. Optisches Analysesystem (20) nach Anspruch 1, weiterhin mit Steuerungsmitteln (42) zum Analysieren eines Ausgangssignals des mindestens ersten Detektors und zum Verschieben der Mittels zur räumlichen Lichtmanipulation (26) entlang der ersten und/oder der zweiten Richtung in Reaktion auf das Ausgangssignal des mindestens ersten Detektors (34, 35).

8. Verfahren zum Kalibrieren eines optischen Analysesystems (20) wobei das optische Analysesystem ein dispersives optisches Element (22) zum räumlichen Trennen von Spektralanteilen eines optischen Signals (18) in einer ersten Richtung hat, wobei das Kalibrierverfahren die folgenden Schritte umfasst:

- Einführen einer Maske zur räumlichen Lichtmanipulation (26) in das optische Analysesystem, wobei die Maske zur räumlichen Lichtmanipulation mindestens ein erstes Kalibriersegment (36, 37) hat,
- Zuführen eines optischen Referenzsignals zu der Maske zur räumlichen Lichtmanipulation, wobei das mindestens erste Kalibriersegment als ein Spalt ausgeführt ist, wobei der Spalt in Bezug auf eine zweite Richtung geneigt ist, wobei die Breite des Spalts entlang der ersten Richtung der spektralen Breite eines bestimmen Spektralanteils des optischen Referenzsignals entspricht, wobei die zweite Richtung im Wesentlichen senkrecht zu der ersten Richtung verläuft,
- Bestimmen mit Hilfe eines mindestens ersten Detektors (34, 35) eines durch das mindestens erste Kalibriersegment übertragenen Teils eines mindestens ersten Spektralanteils des optischen Referenzsignals, wobei der mindestens erste Detektor als ein segmentierter Detektor (54, 56) ausgeführt ist, wobei der segmentierte Detektor mindestens zwei Detektorsegmente (57, 58) hat, die entlang der zweiten Richtung voneinander getrennt sind, so dass ein durch die mindestens zwei Detektorsegmente (57, 58) detektierter Intensitätsunterschied auf eine Fehlausrichtung der Mittel zur räumlichen Lichtmanipulation (26) in der ersten Richtung hinweist,
- Analysieren des detektierten Teils des mindestens ersten Spektralanteils des optischen Referenzsignals auf beiden Detektorsegmenten des mindestens ersten Detektors, um die Mittel zur räumlichen Lichtmanipulation entlang der ersten Richtung zu verschieben,
- Verschieben der Mittel zur räumlichen Lichtmanipulation entlang der zweiten Richtung, bis die auf beiden Segmenten des mindestens ersten Detektors detektierten Intensitäten übereinstimmen.

## Revendications

1. Système d'analyse optique (20) pour déterminer une composante principale d'un signal optique (18), le système d'analyse optique comprenant :

- un élément optique dispersif (22) pour séparer spatialement des composantes spectrales du signal optique dans une première direction,
- un moyen de manipulation de lumière spatiale (26) pour manipuler les composantes spectrales du signal optique,
- au moins un premier segment d'étalonnage (36, 37) à une première position sur le moyen de manipulation de lumière spatiale, le segment d'étalonnage étant au moins en partie transparent pour un signal optique de référence,
- au moins un premier détecteur (34, 35) pour détecter au moins une partie du signal optique de référence transmis à travers le au moins premier segment d'étalonnage, où le au moins premier détecteur est mis en oeuvre comme détecteur segmenté (54, 56), le détecteur segmenté ayant au moins deux segments de détecteur (57, 58) séparés le long d'une seconde direction, où le au moins premier segment d'étalonnage est mis en oeuvre sous forme de fente, où la fente est inclinée par rapport à la seconde direction, où la largeur de la fente le long de la première direction correspond à la largeur spectrale d'une composante spectrale particulière du signal optique de référence, où la seconde direction est sensiblement perpendiculairement à la première direction, de telle sorte qu'une différence d'intensité détectée par les au moins deux segments de détecteur (57, 58) soit indicative d'un mésalignement du moyen de manipulation de lumière spatiale (26) dans la première direction,
- des moyens pour modifier la position relative du moyen de manipulation de lumière spatiale par rapport à l'orientation de l'élément optique dispersif en réponse à un signal de sortie du au moins premier détecteur.

2. Système d'analyse optique (20) selon la revendication 1, comprenant en outre une source optique de référence (32) pour générer un signal optique de référence.

3. Système d'analyse optique (20) selon la revendication 1, dans lequel le signal optique de référence se propage dans un plan de référence et le signal optique se propage dans un plan spectroscopique, le plan de référence et le plan spectroscopique étant sensiblement parallèles et étant séparés le long de la seconde direction.

4. Système d'analyse optique (20) selon la revendication 1, dans lequel le au moins premier détecteur est mis en oeuvre comme détecteur segmenté (54, 56), le détecteur segmenté ayant au moins deux segments de détecteur (57, 58) séparés le long de la première direction.

**5.** Système d'analyse optique (20) selon la revendication 1, dans lequel le au moins premier détecteur (34, 35) est intégré dans le moyen de manipulation de lumière spatiale.

**6.** Système d'analyse optique (20) selon la revendication 1, dans lequel le au moins premier détecteur (34, 35) est en outre adapté pour détecter au moins une partie des composantes spectrales du signal optique, le système d'analyse optique comprenant en outre des moyens pour déplacer le moyen de manipulation de lumière spatiale le long de la seconde direction.

**7.** Système d'analyse optique (20) selon la revendication 1, comprenant en outre des moyens de commande (42) pour analyser une sortie du au moins premier détecteur et pour déplacer le moyen de manipulation de lumière spatiale (26) le long de la première et/ou de la seconde direction en réponse au signal de sortie du au moins premier détecteur (34, 35).

**8.** Procédé d'étalonnage d'un système d'analyse optique (20), le système d'analyse optique ayant un élément optique dispersif (22) pour séparer spatialement des composantes spectrales d'un signal optique (18) dans une première direction, le procédé d'étalonnage comprenant les étapes consistant à :

- insérer un masque de modulation de lumière spatiale (26) dans le système d'analyse optique, le masque de modulation de lumière spatiale ayant au moins un premier segment d'étalonnage (36, 37),
- appliquer un signal optique de référence sur le masque de modulation de lumière spatiale, où le au moins premier segment d'étalonnage est mis en oeuvre sous forme de fente, où la fente est inclinée par rapport à une seconde direction, où la largeur de la fente le long de la première direction correspond à la largeur spectrale d'une composante spectrale particulière du signal optique de référence, où la seconde direction est sensiblement perpendiculaire à la première direction,
- déterminer, au moyen d'un au moins premier détecteur (34, 35), une partie d'une au moins première composante spectrale du signal optique de référence transmis par le au moins premier segment d'étalonnage, où le au moins premier détecteur est mis en oeuvre comme détecteur segmenté (54, 56), le détecteur segmenté ayant au moins deux segments de détecteur (57, 58) séparés le long de la seconde direction, de telle sorte qu'une différence d'intensité détectée par les au moins deux segments de détecteur (57, 58) soit indicative d'un mésalignement du moyen de manipulation de lumière spatiale (26) dans la première direction,
- analyser la partie détectée de la au moins première composante spectrale du signal optique de référence sur les deux segments de détecteur du au moins premier détecteur afin de déplacer le moyen de manipulation de lumière spatiale le long de la première direction,
- déplacer le moyen de manipulation de lumière spatiale le long de la seconde direction jusqu'à ce que les intensités détectées sur les deux segments du au moins premier détecteur correspondent.

FIG.1

FIG.2A

FIG.2B

FIG.3

# FIG.4

# FIG.5

FIG.6

FIG.7

## FIG.8

## FIG.9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4652761 A
- JP 61266925 A
- US 5737076 A
- US 3846024 A
- US 6198531 B1
- WO 02057759 A